# EUROPÄISCHE PATENTSCHRIFT

(11) **EP 1 586 470 B1**
(45) Veröffentlichungstag und Bekanntmachung des Hinweises auf die Patenterteilung: **24.12.2008**
(21) Anmeldenummer: 05005545.8
(22) Anmeldetag: 15.03.2005
(51) Int. Cl.: B60D 1/54

(54) **Anhängerkupplung**
Trailer coupling
Attelage de remorque

(30) Priorität: 17.04.2004 DE 202004006205 U
(43) Veröffentlichungstag der Anmeldung: 19.10.2005
(73) Patentinhaber: WESTFALIA - Automotive GmbH, 33378 Rheda-Wiedenbrück (DE)
(72) Erfinder: Abels, Frank O., 29633 Munster (DE); Von Alm, Günter, 29614 Soltau (DE)
(74) Vertreter: Bregenzer, Michael

(56) Entgegenhaltungen:
- EP-A- 1 380 445
- DE-A1- 10 023 640
- DE-A1- 10 023 641
- DE-A1- 10 104 185
- DE-A1- 10 243 045
- DE-U1-6202004 006 66
- US-A- 4 109 930
- US-B1- 6 447 000

## Beschreibung

Die Erfindung betrifft eine Anhängekupplung für Kraftfahrzeuge gemäß dem Oberbegriff des Anspruchs 1.

Eine solche Anhängekupplung geht aus der DE 100 23 640 A1 hervor.

Ein mit einer Kugel versehener Kupplungsarm wird mittels einer Vorrichtung zum Absenken und Schwenken aus einer von außerhalb des Kraftfahrzeuges z.B. nicht sichtbaren Ruhestellung in eine zum Befestigen eines Anhängers geeignete Betriebsstellung motorisch oder manuell angetrieben bewegt.

Es sind verschiedene Ausführungsformen solcher motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt werden, so dass die Kugel der Kugelstange unterhalb des Stossfängers liegt, danach wird die Kugelstange um ca. 90 DEG seitlich verdreht und anschließend. motorisch wieder angehoben, bis die Kugelstange sich in der Betriebsstellung befindet. Diese Ausführungsformen haben folgende Nachteile:

Die Bodenfreiheit reicht (je nach Fahrzeugtyp) gelegentlich nicht aus, besonders wenn das Fahrzeug über einer Bordsteinkante steht.

Die senkrecht angeordnete Kugelstange hat eine Bauform, die bei modernen Fahrzeugen mit besonders niedrig liegender Kofferraumkante nicht in das Fahrzeug integriert werden kann.

Aufwendige Konstruktion - teilweise mit 2 Motoren - um die drei Bewegungsschritte Senken, Schwenken, Heben zu realisieren.

Aufwendige Steuerung der Bewegungsschritte entweder mechanisch oder elektrisch.

Passgenaue und damit teure Führungen erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet sind und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:

Die Bodenfreiheit reicht bei bestimmten Ausführungsformen und Fahrzeugen ebenfalls nicht aus.

Bei einigen Fahrzeugformen sind sie wegen der Art des Fahrzeugbodens nur schwer oder gar nicht zu integrieren.

Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem Verschleiß unterliegen und teuer in der Herstellung sind.

Die Hauptschwenklager unterliegen starken Betriebskräften und müssen daher in aufwendigen und teuren Techniken hergestellt werden.

Es sind schließlich Ausführungsformen bekannt, z.B. DE 100 23 640 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren lässt, hat dennoch folgende Nachteile:

Zur Realisierung der Bewegung sind unter Umständen 2 Motoren erforderlich.

Es gibt wiederum drei Bewegungsschritte - Senken - Drehen - Heben - dazu ist eine spezielle Steuerung erforderlich -

Die Herstellung ist wegen zweier großer, die ganze Last aufnehmenden Lager aufwendig und teuer.

Nachdem verschiedene motorisch angetriebene Anhängekupplungen mittlerweile produziert werden, und es sich herausgestellt hat, dass alle bekannten Typen in der Herstellung für den automobilen Massenmarkt zu teuer sind, ist es Aufgabe der Erfindung, eine insbesondere motorisch angetriebene Anhängekupplung zu schaffen, die besonders einfach und billig in der Herstellung ist. Zur Lösung der Aufgabe ist eine Anhängekupplung gemäß der technischen Lehre des Anspruchs 1 vorgesehen.

Bei der erfindungsgemäßen Anhängekupplung kommen keine Drehlager, Verriegelungsvorrichtungen oder andere Bauteile mit hoher Fertigungsgenauigkeit zur Anwendung. Die zu bewegenden Teile werden innerhalb eines Gehäuses auf einer schiefen Ebene verschoben und ohne Verwendung eines Drehlagers z.B. über eine Kulissenführung in die Gebrauchsstellung befördert und dort durch eine Spindel nach dem Prinzip des Schraubstocks festgeklemmt.

Durch einen Anstellwinkel der schiefen Ebene wird die Absenkhöhe des Kugelarmes konstruktiv auf das jeweilige Fahrzeug angepasst.

Ein Ausführungsbeispiel der Erfindung ist in den folgenden Abbildungen dargestellt. Aus Gründen der Übersichtlichkeit wurde auf die Darstellung des Trägers, mit dem die Anhängerkupplung am Fahrzeug befestigt wird, verzichtet. Ebenso ist die Deckplatte des Gehäuses der Anhängerkupplung nicht dargestellt, da sie den Blick auf die Funktionsbaugruppen verbirgt.

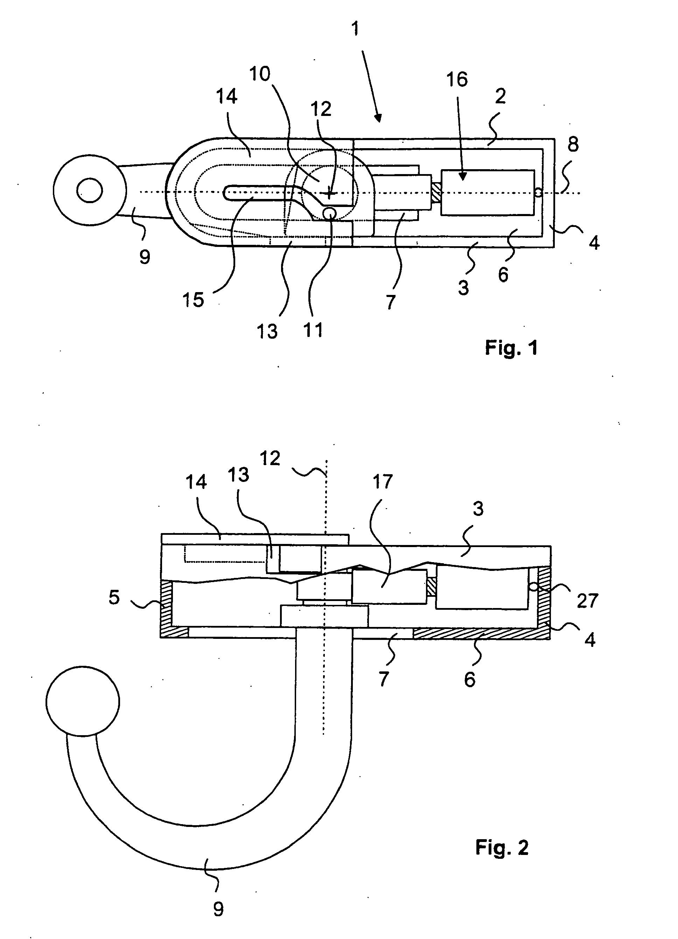

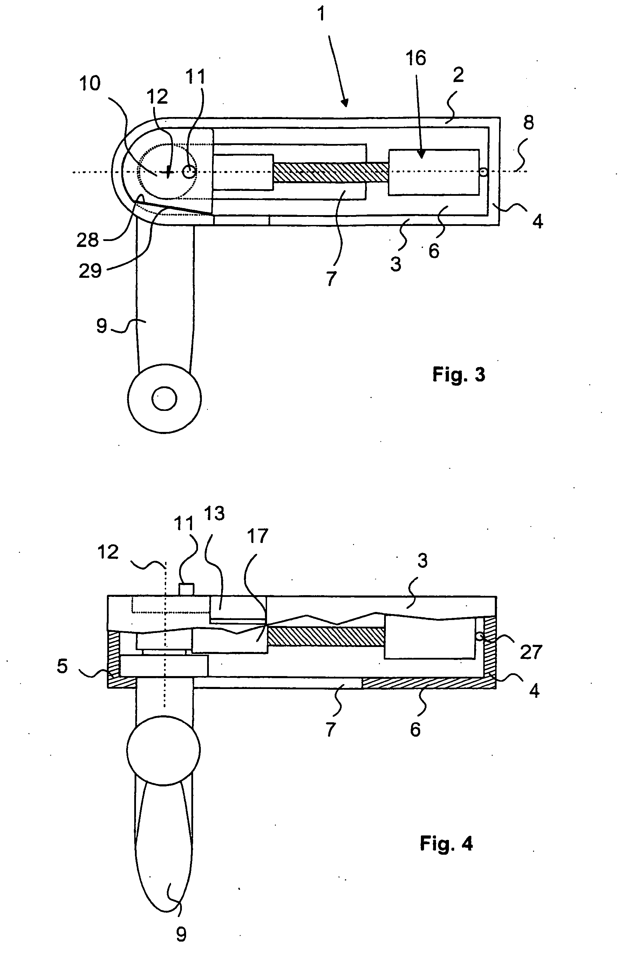

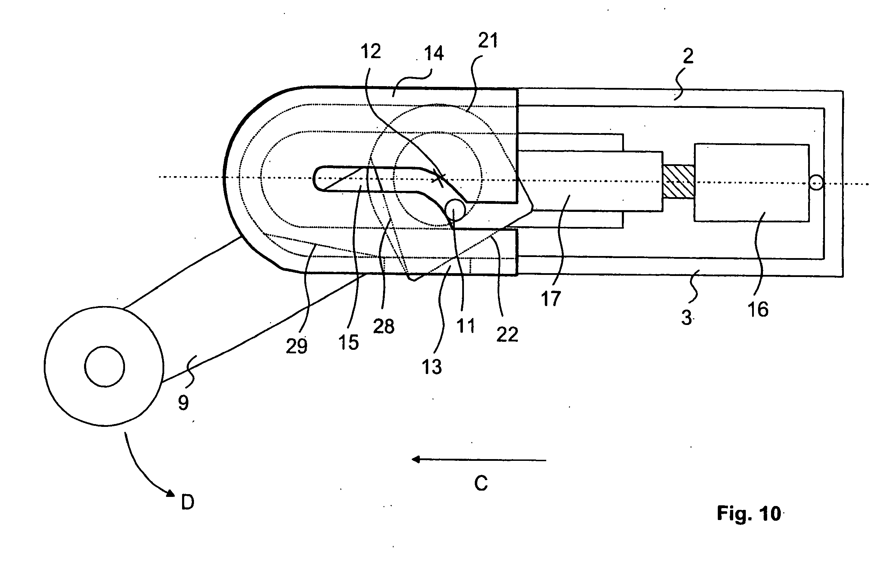

Anhand der Figuren 1 bis 13 wird die Funktion der Erfindung erläutert.

Eine beispielhafte Ausführung der erfindungsgemäßen Anhängerkupplung besteht aus einem wannenförmigen Gehäuse 1 mit den Seitenwänden 2, 3, der Gehäuserückwand 4, der vorderen Gehäusewand 5 sowie dem Gehäuseboden 6 mit dem Schlitz 7.

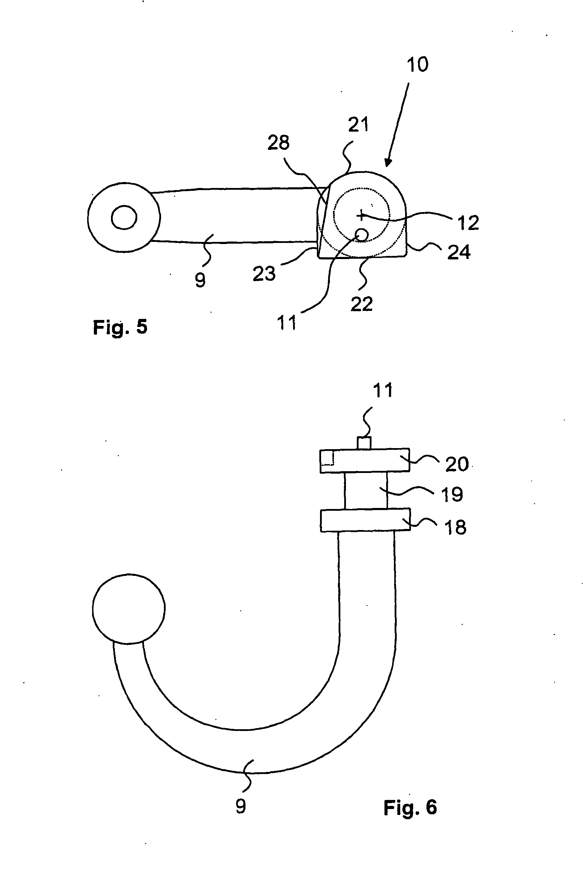

Durch den Schlitz 7 im Gehäuseboden 6 ragt der Kugelarm 9 hindurch. Der sich im Gehäuse 1 befindliche Teil des Kugelarmes 9 ist als Drehachsglied 10 ausgeführt. Das Drehachsglied 10 besitzt im unteren Teil eine zylindrische Form, dessen Durchmesser größer als die lichte Weite des Schlitzes 7. Der obere Teil des Drehachsgliedes 10 ist asymmetrisch und wird in Fig. 5 näher beschrieben. Zwischen dem oberen und unteren Teil des Drehachsgliedes 10 ist eine Ringnut 19 angeordnet, in die eine Anlenkung 17 des Linearantriebes 16 eingreift. Der Linearantrieb 16 ist an der Gehäuserückwand 4 im Lager 23 schwenkbar gelagert.

Fig. 1 zeigt die Anhängerkupplung in Nichtgebrauchsstellung in einer Draufsicht, Fig. 2 in einer Seitenansicht.

Der Linearantrieb 16 ist ganz eingefahren, der Kugelarm 9 ist im Schlitz 7 in Richtung Gehäuserückwand 4 zurückgezogen. Der Kugelarm 9 steht parallel zur Längsachse 8.

Fig. 3 zeigt die Anhängekupplung in der Gebrauchsstellung in einer Draufsicht, Fig. 4 in einer Seitenansicht. Die Kulisse 14 ist hier nicht dargestellt, um die Lage des Drehachsgliedes in der Gebrauchsstellung zu zeigen.

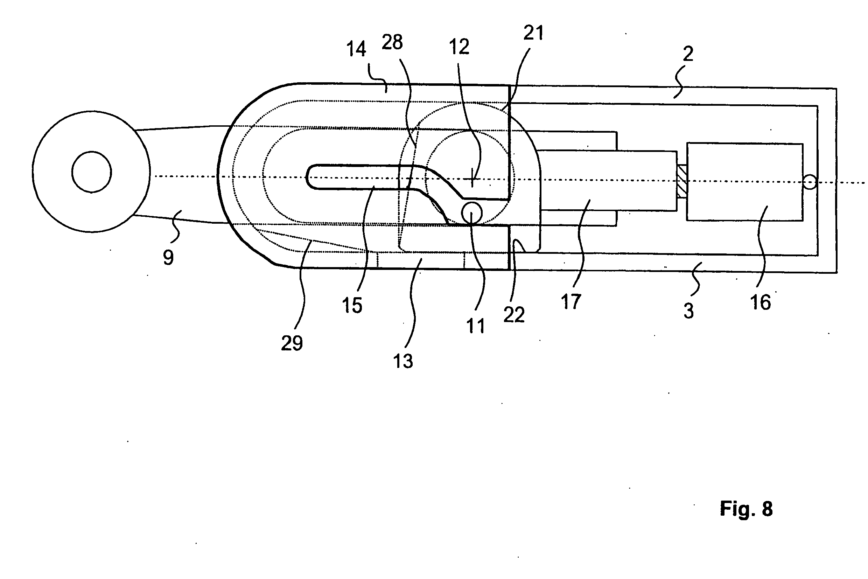

Der an der Ringnut 20 am Drehachsglied 10 angreifende Linearantrieb 16 ist ausgefahren und hat den Kugelarm 9 in Richtung vordere Gehäusewand 5 geschoben. Während dieser Bewegung hat der Kugelarm 9 durch das Zusammenwirken von Stift 11 und Kulisse 14 eine Schwenkbewegung um die Schwenkachse 12 durchgeführt, welche in den Fig. 8 bis 13 näher erläutert wird.

In der Gebrauchsstellung ist der Kugelarm 9 mit Seitenflächen 23, 24 und der Keilfläche 28 am halbzylindrischen Teil 21 des Drehachsgliedes 10 zwischen der Keilfläche 29 an der vorderen Seitenwand 3 sowie der hinteren (2) und der vorderen Seitenwand 3 festgesetzt. Dadurch werden der Grossteil der Kräfte, die von außen z.B. durch einen Anhänger auf den Kugelarm 9 einwirken, in das Gehäuse 1 eingeleitet. Nur ein kleiner Teil dieser Kräfte wirken auf den Linearantrieb 16.

Fig. 5 zeigt den Kugelarm 9 mit dem Drehachsglied 10 in einer Draufsicht, Fig. 6 in einer Seitenansicht.

Das Drehachsglied 10 besteht aus einem unteren zylindrischen Teil 18 und einem oberen Teil, der aus einem halbzylindrischen Teil 21, und einem halbquaderförmigen Teil mit den geraden Flächen 22, 23, 24 zusammengesetzt ist. Im oberen Teil 20 ist ein Teil der Seitenfläche 23 als Keilfläche 28 ausgearbeitet, welche in der Gebrauchsstellung mit einer Keilfläche 29 am Gehäuse 1 korrespondiert. Das Drehachsglied 10 weist in einer Draufsicht ein schildförmiges Profil auf.

Zwischen dem unteren und oberen Teil ist eine Ringnut 19 angeordnet, an der der Linearantrieb 16 mit der Anlenkung 17 angreift.

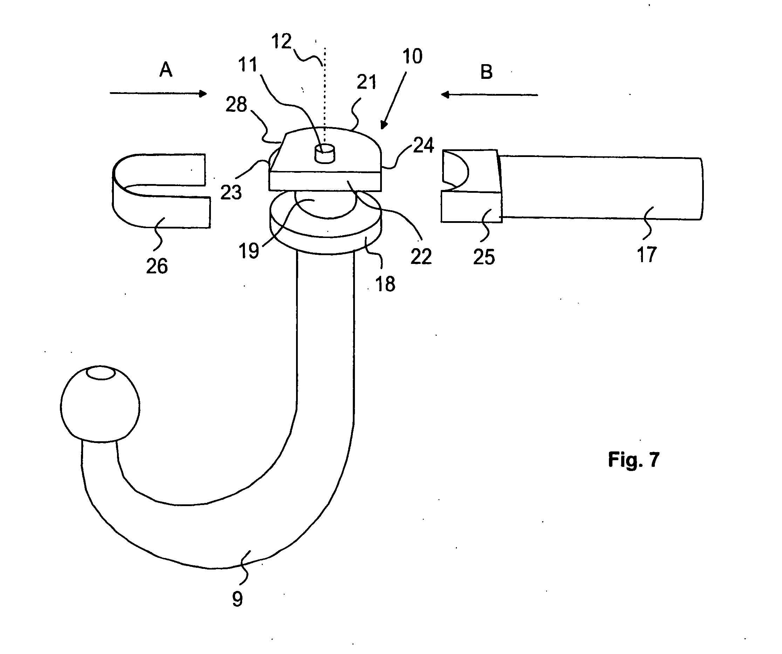

Fig. 7 zeigt die Verbindung zwischen Kugelarm 9 und Linearantrieb 16 in einer Explosionsdarstellung.

An der Anlenkung 17, die z.B. Teil einer Gewindehülse eines Spindelantriebes sein kann, befindet sich auf der dem Drehachsglied 10 zugewandten Seite eine teilkreisförmige Lagerfläche 25, deren Radius dem Radius der Ringnut 19 entspricht.
Eine U-förmige Lagerfläche 26, die z.B. als U-förmiger Blechstreifen ausgeführt sein kann, umfasst den Kugelarm 9 in der Ringnut 19 und bildet bei Zusammenführung beider Teile in Pfeilrichtungen A,B mit der Lagerfläche 25 ein kreisförmiges Lager, in dem sich der Kugelarm 9 um die Schwenkachse 12 drehen kann. Die Verbindung zwischen den Lagerteilen 25, 26 ist hier nicht näher dargestellt, sie kann z.B. durch eine Schraub- oder Nietverbindung realisiert sein.

Die Fig. 8 bis 13 zeigen den Ablauf eines Ausschwenkvorganges, der Einschwenkvorgang läuft sinngemäß in umgekehrter Reihenfolge ab.

In Fig. 8 befindet sich der Kugelarm 9 in der Nichtgebrauchsstellung. Der Stift 11 hat noch nicht in den Kulissenschlitz eingegriffen. Die gerade Fläche 22 und der halbzylindrische Teil 21 des Drehachsgliedes 10 liegen an der hinteren und vorderen Gehäusewand 2, 3 an.

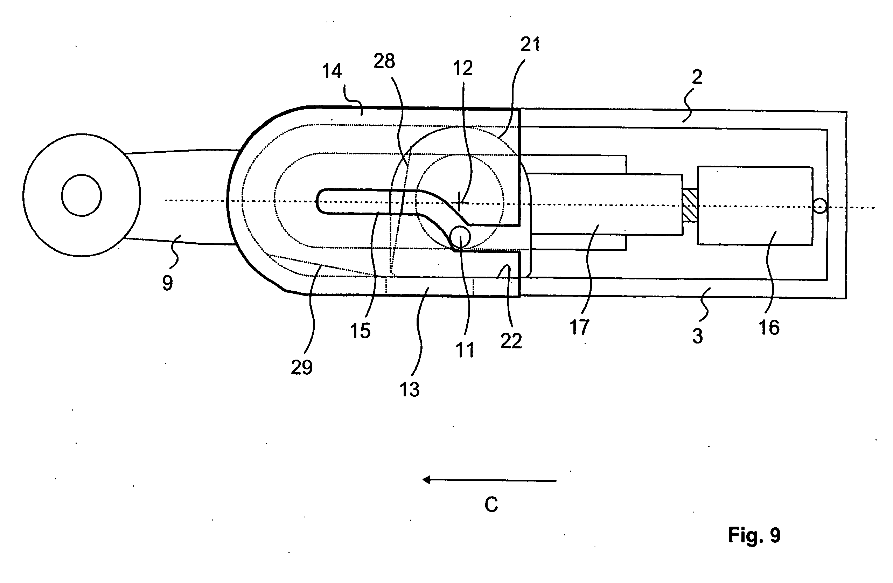

In Fig. 9 hat der Linearantrieb 14 die Anlenkung 17 und damit den Kugelarm 9 in Pfeilrichtung C bewegt. Der Stift. 11 greift in den Kulissenschlitz 15 ein. An dieser Stelle endet die rein lineare Bewegung des Kugelarmes 9.

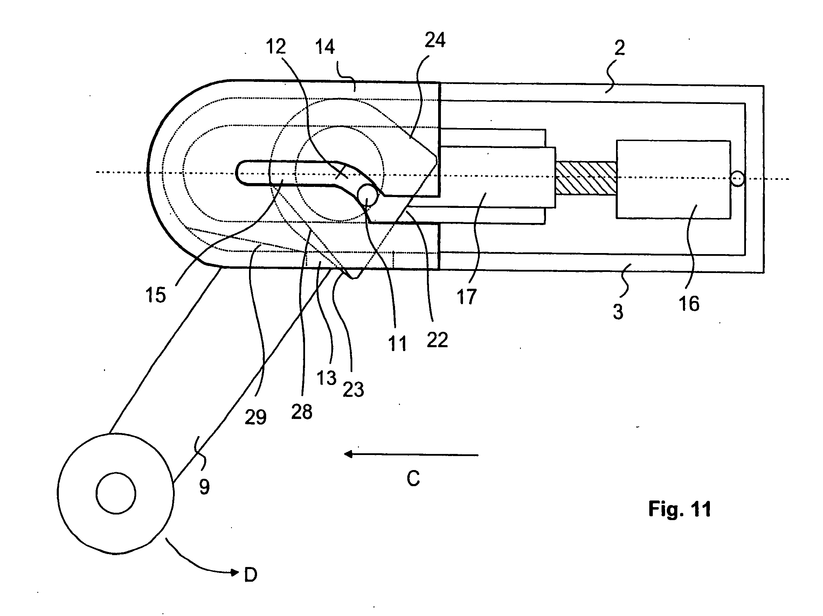

In Fig. 11 ist der Schwenkvorgang eingeleitet. Der Kulissenschlitz 15 weist eine Kurvenbahn auf. Der Stift 11 folgt der Krümmung des Kulissenschlitzes 15, dadurch wird das Drehachsglied 10 und damit der Kugelarm 9 um die Schwenkachse 12 in Pfeilrichtung D geschwenkt. Die Ecke, die aus den Seitenflächen 22, 23 gebildet wird, taucht in einen Gehäusedurchbruch 13 ein. Die Bewegungen des Drehachsgliedes 10 sind in Längsrichtung des Gehäuses 1 durch den Linearantrieb 16 und rechtwinklig dazu durch den an der Wand des Kulissenschlitzes 15 anliegenden Stift 11 sowie durch die an der hinteren Seitenwand 2 anliegenden halbzylindrischen Teil 21 begrenzt.

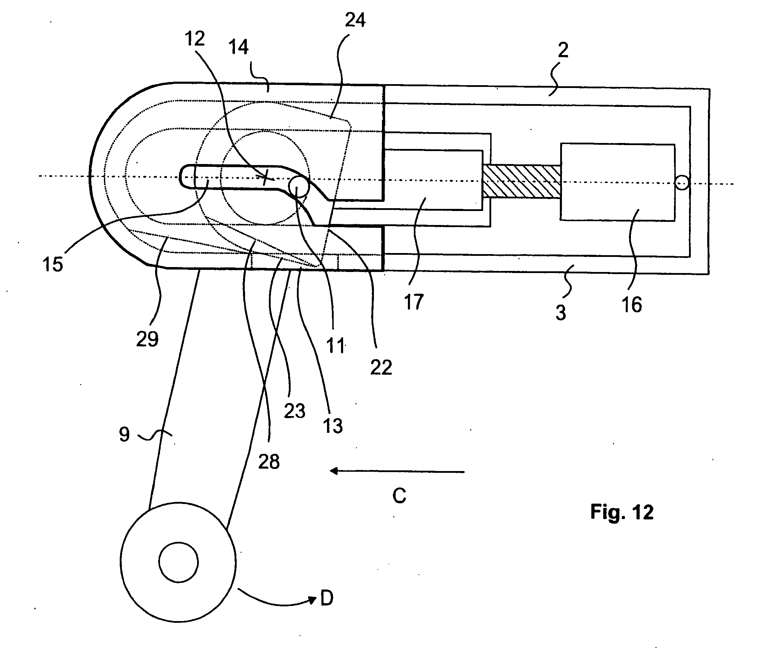

In Fig. 11 und 12 ist der weitere Ablauf des Schwenkvorganges dargestellt.

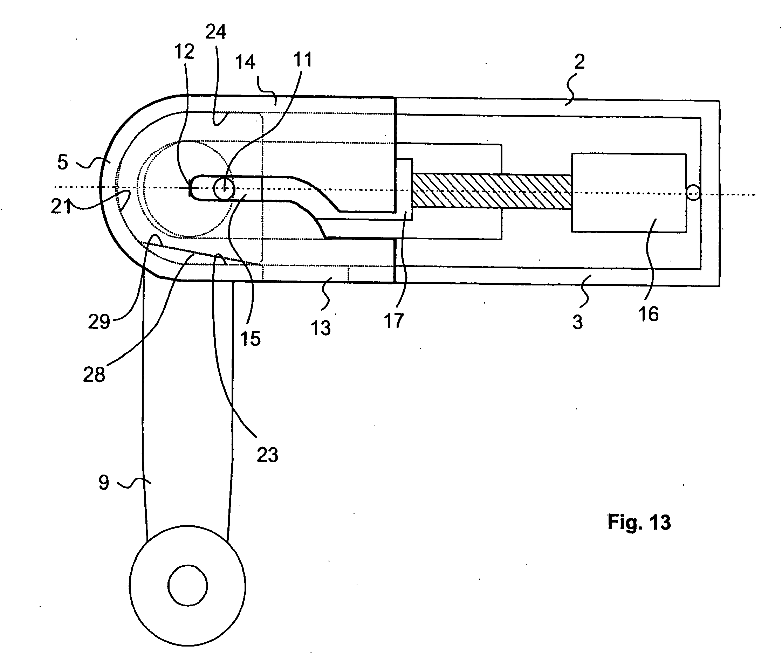

In Fig. 13 ist der Schwenkvorgang abgeschlossen, der Kugelarm 9 ist in der Gebrauchsstellung. Der Kugelarm 9 ist mit Seitenflächen 23, 24 und der Keilfläche 28 am halbzylindrischen Teil 21 des Drehachsgliedes 10 zwischen der Keilfläche 29 an der vorderen Seitenwand 3 sowie der hinteren 2 und der vorderen Seitenwand 3 festgesetzt. Dadurch werden der Grossteil der Kräfte, die von außen z.B. durch einen Anhänger auf den Kugelarm 9 einwirken, in das Gehäuse 1 eingeleitet. Nur ein kleiner Teil dieser Kräfte wirken auf den Linearantrieb 16.

Die Seiten 23, 24 des Drehachsgliedes 10 sind zwischen der Keilfläche 29 und der Seitenwand 3 des Gehäuses 1 verkeilt.

Solange der Linearantrieb 16 sich nicht wieder in die entgegengesetzte Richtung bewegt, bleibt der Kugelarm 9 fest in der Gebrauchsstellung, von außen einwirkende Kräfte werden in das Gehäuse und entlang der Längsachse 8 in den Linearantrieb 16 eingeleitet.

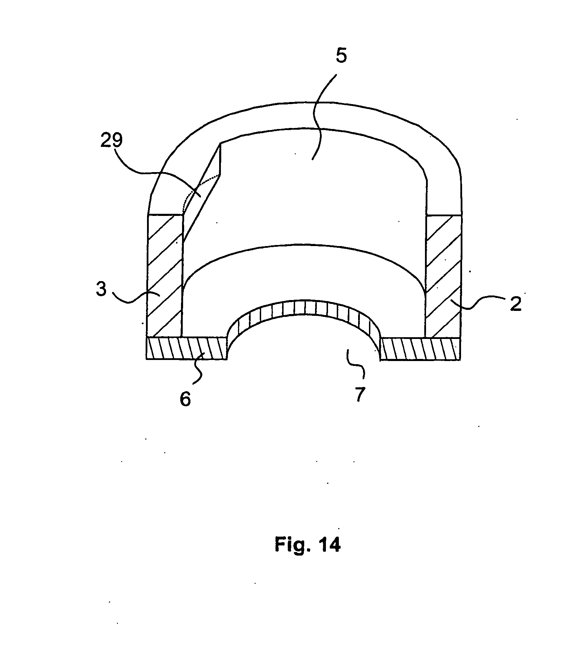

Fig. 14 zeigt einen Querschnitt durch das Gehäuse 1 im Bereich zwischen Gehäusedurchbruch 13 und Keilfläche 29. Die Keilfläche 29 befindet sich hier nur im oberen Bereich der vorderen Seitenwand 3, damit die Seitenfläche 23 darunter an der vorderen Seitenwand 3 anliegen kann.

In der oben beschriebenen beispielhaften Ausführung der Erfindung ist nur der obere Teil 20 des Drehachsgliedes 10 derart ausgeführt, dass sich das Drehachsglied 10 und damit der Kugelarm 9 in der Gebrauchsstellung am Gehäuse 1 festsetzen kann. In weiteren vorteilhaften Ausführungen kann der untere zylindrische Teil 18 des Drehachsgliedes 10 analog zum oberen Teil 20 ausgeführt sein, um ebenfalls zum Festsetzen des Kugelarmes beizutragen.

## Patentansprüche

1. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuse (1) gelagerten Drehachsglied (10) fest verbunden ist, wobei der Kupplungsarm (9) mittels einer Vorschubeinrichtung (16) zwischen einer am Fahrzeug angeordneten nach hinten gerichteten Gebrauchsstellung und einer weiter vorne angeordneten Nichtgebrauchsstellung hin und her verstellbar ist, wobei das Drehachsglied (10) einen halbzylindrischen Teil (21) und einen quaderförmigen Teil aufweist, **dadurch gekennzeichnet, dass** sich die Verstellbewegung aus zwei Bewegungen zusammensetzt, bei denen das Drehachsglied (10) ausgehend von der Nichtgebrauchsstellung in einem ersten Bewegungsabschnitt in dem Gehäuse (1) verschoben und in einem zweiten Bewegungsabschnitt verschwenkt wird, so dass der Kupplungsarm (12) nach Vollendung beider Bewegungen die Gebrauchsstellung einnimmt, dass das Drehachsglied (10) beim Bewegen in Richtung der Gebrauchsstellung mittels der manuellen oder kraftangetriebenen Vorschubeinrichtung (16) in eine U-förmige Aufnahme das Drehachsglied (10) umhüllenden Gehäuses (1) einschwenkt, dass eine Seite (24) des quaderförmigen Teils tangential in den Teilzylindrischen Teil (21) übergeht und an einer zu dieser Seite (24) des quaderförmigen Teils entgegengesetzten Seite (23) des quaderförmigen Teils eine Keilfläche (28) in der Art eines Sekantenschnitts des Teilzylindrischen Teils (21) ausgebildet ist, dass die Mittelachse (12) des Teilzylindrischen Teils (21) in die Mittelachse des Kupplungsarmes übergeht, dass der Abstand einer langen Seite (22) des quaderförmigen Teils von der Mittelachse des Teilzylinders dem Radius des Teilzylindrischen Teils (21) entspricht, dass die Keilfläche (28) in der Gebrauchsstellung an einer Keilfläche (29) des Gehäuses (1) anliegt, so dass die Seiten (23, 24) des Drehachsgliedes (10) zwischen der Keilfläche (29) und einer Seitenwind (3) des Gehäuses (1) festgesetzt sind, dass das Drehachsglied (10) mit dem Kupplungsarm (9) um ca. 90 Grad geschwenkt wird, bis das Drehachsglied (10) mit seiner Keilfläche (28) an der Keilfläche (29) des Gehäuses (1) anliegt, und dass ein oben am Drehachsglied (10) exzentrisch zu dessen Mittelachse angeordneter Mitnehmerbolzen (11) in einen Kulissenschlitz (15) eingreift, dass der Mitnehmerbolzen (11) bei einer Betätigung des Stellantriebs (16) gegen einen Gehäuseanschlag läuft und dabei das Drehachsglied (10) und damit der Kugelarm (9) um seine Schwenkachse (12) schwenkt, und dass das Drehachsglied (10) durch den Stellantrieb (16) verdrehsicher in der Gebrauchsstellung gehalten wird.

2. Anhängekupplung für Kraftfahrzeuge nach Anspruch 1, **dadurch gekennzeichnet, dass** das Gehäuse eine Ausnehmung (13) aufweist, in die das Drehachsglied (10) beim Schwenken eintauchen kann.

3. Anhängekupplung für Kraftfahrzeuge nach Anspruch 1 oder 2, **dadurch gekennzeichnet, dass** das Drehachsglied (10) und damit der Kugelarm (9) durch eine Krümmung des Kulissenschlitzes (15) bei einer Betätigung des Stellantriebs (16) um seine Schwenkachse (12) geschwenkt wird.

4. Anhängekupplung für Kraftfahrzeuge nach Anspruch 1 **dadurch gekennzeichnet, dass** das Drehachsglied (10) in Zahnradform ausgebildet ist und am Ende seiner Linearbewegung auf eine am Gehäuse angeordnete Zahnstange trifft, in die das zahnradförmige Drehachsglied dann eingreift und die durch die Kraft des Linearantriebes (16) zur Drehbewegung des Kupplungsarms (9) führt.

5. Anhängekupplung für Kraftfahrzeuge nach einem der vorhergehenden Ansprüche, **dadurch gekennzeichnet, dass** das Drehachsglied (10) durch einen Pressdruck des Stellantriebes (16) verdrehsicher in der Gebrauchsstellung gehalten wird.

6. Anhängekupplung für Kraftfahrzeuge nach einem der vorhergehenden Ansprüche, **dadurch gekennzeichnet, dass** das Gehäuse (1) einen durchgehenden Gehäuseboden (6) oder mindestens zwei hintereinander in unterschiedlichen winkeln zur Horizontale angeordnete Gehäusebodenteile aufweist.

7. Anhängekupplung für Kraftfahrzeuge nach einem der vorhergehenden Ansprüche, **dadurch gekennzeichnet, dass** sich die Bewegungen überlagern.

8. Anhängekupplung für Kraftfahrzeuge nach einem der vorhergehenden Ansprüche, **dadurch gekennzeichnet, dass** eine zylindrische Seitenfläche (23) Drehachsglieds (10) und die Keilfläche (28) bezüglich einer Schwenkachse (12) des Drehachsglieds nebeneinander angeordnet sind, und dass in der Gebrauchsstellung die zylindrische Seitenfläche (23) an einer vorderen, zylindrischen Seitenwand (3) des Gehäuses (1) und die Keilfläche (28) an der Keilfläche (29) des Gehäuses (1) anliegen.

## Claims

1. Trailer coupling for motor vehicles, in particular motor cars, with a coupling arm (9) supporting a raised head section for releasably attaching a trailer at one end, while the other end is permanently connected to a hinge element (10), which is movably bearing-mounted in a housing (1), wherein the coupling arm (9) is adjustable by means of a feed mechanism (16) between a position of use in which it is located on the vehicle and oriented towards the rear and an inoperative position which is further forward, wherein the hinge element (10) comprises a semi-cylindrical part (21) and a rectangular part, **characterised in that** the adjusting movement combines two movements, wherein the hinge element (10), starting from the inoperative position, is displaced in the housing (1) in a first movement section and swivelled in a second movement section, so that the coupling arm (9) adopts its position of use on completion of both movements, **in that** the hinge element (10), as it moves towards its position of use, swivels into a U-shaped location of the housing (1) enclosing the hinge element (10) by means of the manual or power-driven feed mechanism (16), **in that** one side (24) of the rectangular part tangentially merges into the semi-cylindrical part (21) and a wedge surface (28) in the manner of a secant section of the semi-cylindrical part (21) is formed on the side (23) of the rectangular part which is opposite the said side (24), **in that** the central axis (12) of the semi-cylindrical part (21) merges into the central axis of the coupling arm, **in that** the distance of a long side (22) of the rectangular part from the central axis of the semi-cylinder corresponds to the radius of the semi-cylindrical part (21), **in that** the wedge surface (28) bears against a wedge surface (29) of the housing (1) in the position of use, so that the sides (23, 24) of the hinge element (10) are held between the wedge surface (29) and a side wall (3) of the housing (1), **in that** the hinge element (10) together with the coupling arm (9) is swivelled by approximately 90 degrees until the wedge surface (28) of the hinge element (10) bears against the wedge surface (29) of the housing (1), and **in that** a driving pin (11) provided at the top end of the hinge element (10) and eccentrically located relative to its central axis engages a gate slot (15), **in that** the driving pin (11), following the actuation of the actuator (16), runs against a housing stop while swivelling the hinge element (10) and thus the ball arm (9) about its pivot axis (12), and **in that** the hinge element (10) is non-rotatably held in the position of use by the actuator (16).

2. Trailer coupling for motor vehicles according to claim 1, **characterised in that** the housing has a recess (13), into which the hinge element (10) can dip in the swivelling process.

3. Trailer coupling for motor vehicles according to claim 1 or 2, **characterised in that** the hinge element (10) and thus the ball arm (9) are swivelled about the pivot axis (12) by a curvature of the gate slot (15) when the actuator (16) is actuated.

4. Trailer coupling for motor vehicles according to claim 1, **characterised in that** the hinge element (10) is designed in the shape of a gear and at the end of its linear movement meets a rack located on the housing, which the gear-shaped hinge element then engages, the power of the linear drive resulting in the rotary movement of the coupling arm (9).

5. Trailer coupling for motor vehicles according to any of the preceding claims, **characterised in that** the hinge element (10) is non-rotatably held in its position of use by the pressure of the actuator (16).

6. Trailer coupling for motor vehicles according to any of the preceding claims, **characterised in that** the housing (1) has a continuous housing base (6) or at least two housing base parts disposed one behind the other at different angles relative to the horizontal.

7. Trailer coupling for motor vehicles according to any of the preceding claims, **characterised in that** the movements are superimposed on one another.

8. Trailer coupling for motor vehicles according to any of the preceding claims, **characterised in that** a cylindrical side surface (23) of the hinge element (10) and the wedge surface (28) are disposed adjacent to one another relative to a pivot axis (12) of the hinge element, and **in that** in the position of use the cylindrical side surface (23) bears against a front cylindrical side wall (3) of the housing (1) and the wedge surface (28) bears against the wedge surface (29) of the housing (1).

## Revendications

1. Attelage de remorque pour véhicules motorisés, en particulier des véhicules personnels, avec un bras d'attelage (9) qui porte à une extrémité une pièce de tête relevée pour la fixation amovible d'une remorque et est relié fixement à l'autre extrémité à un organe d'axe rotatif (10) monté mobile dans un boîtier (1), le bras d'attelage (9) pouvant être déplacé en va et vient, au moyen d'un dispositif d'avance (16), entre une position d'utilisation placée sur le véhicule et dirigée vers l'arrière et une position de non-utilisation placée plus en avant, l'organe d'axe rotatif (10) présentant une partie semi-cylindrique (21) et une partie parallélépipédique, **caractérisé en ce que** le mouvement de déplacement se compose de deux mouvements dans lesquels l'organe d'axe rotatif (10) est déplacé en partant de la position de non-utilisation dans une première section de mouvement dans le boîtier (1) et est pivoté dans une deuxième section de mouvement, de sorte qu'au terme des deux mouvements, le bras d'attelage (12) occupe la position d'utilisation, **en ce que**, lors d'un mouvement en direction de la position d'utilisation au moyen du dispositif d'avance (16) manuel ou motorisé, l'organe d'axe rotatif (10) rentre par pivotement dans un logement en forme de U du boîtier (1) entourant l'organe d'axe rotatif (10), **en ce qu'**une face (24) de la partie parallélépipédique se raccorde tangentiellement sur la partie partiellement cylindrique (21) et, sur une face (23) de la partie parallélépipédique opposée à cette face (23) de la partie parallélépipédique, est formée une surface cunéiforme (28) à la manière d'une section de la partie partiellement cylindrique (21), **en ce que** l'axe médian (12) de la partie partiellement cylindrique (21) se raccorde à l'axe médian du bras d'attelage, **en ce que** la distance entre une grande face (22) de la partie parallélépipédique et l'axe médian de la partie partiellement cylindrique correspond au rayon de la partie partiellement cylindrique (21), **en ce que** la surface cunéiforme (28) s'appuie dans la position d'utilisation contre une surface cunéiforme (29) du boîtier (1), de sorte que les faces (23, 24) de l'organe d'axe rotatif (10) sont immobilisées entre la surface cunéiforme (29) et une paroi latérale (3) du boîtier (1), **en ce que** l'organe d'axe rotatif (10) est pivoté avec le bras d'attelage (9) d'environ 90 degrés jusqu'à ce que l'organe d'axe rotatif (10) avec sa surface cunéiforme (28) s'appuie contre la surface cunéiforme (29) du boîtier (1), et **en ce que** qu'un goujon d'entraînement (11) placé en haut sur l'organe d'axe rotatif (10) de manière excentrée par rapport à son axe médian s'engage dans une fente de coulisse (15), **en ce qu'**en cas d'actionnement du moteur de manoeuvre (16), le goujon d'entraînement (11) se déplace contre une butée de boîtier et l'organe d'axe rotatif (10) et, avec lui, le bras d'attelage (9) pivotent autour de leur axe de pivotement (12), et **en ce que** l'organe d'axe rotatif (10) est tenu par le moteur de manoeuvre (16) de manière immobile en rotation dans la position d'utilisation.

2. Attelage de remorque pour véhicules motorisés selon la revendication 1, **caractérisé en ce que** le boîtier présente un évidement (13) dans lequel l'organe d'axe rotatif (10) peut s'enfoncer lors du pivotement.

3. Attelage de remorque pour véhicules motorisés selon la revendication 1 ou 2, **caractérisé en ce que** l'organe d'axe rotatif (10) et, avec lui, le bras d'attelage (9) sont pivotés autour de leur axe de pivotement (12) par une courbure de la fente de coulisse (15) lors d'un actionnement du moteur de manoeuvre (16).

4. Attelage de remorque pour véhicules motorisés selon la revendication 1, **caractérisé en ce que** l'organe d'axe rotatif (10) est réalisé sous forme de roue dentée et rencontre, à l'extrémité de son mouvement linéaire, une crémaillère placée sur le boîtier, dans laquelle l'organe d'axe rotatif en forme de roue dentée s'engage alors et qui, du fait de la force du moteur de manoeuvre (16), provoque le mouvement de rotation de l'arbre d'attelage (9).

5. Attelage de remorque pour véhicules motorisés selon l'une des revendications précédentes, **caractérisé en ce que** l'organe d'axe rotatif (10) est tenu de manière immobile en rotation dans la position d'utilisation par une pression du moteur de manoeuvre (16).

6. Attelage de remorque pour véhicules motorisés selon l'une des revendications précédentes, **caractérisé en ce que** le boîtier (1) présente un fond de boîtier (6) continu ou au moins deux parties de fond de boîtier placées l'une derrière l'autre avec différents angles par rapport à l'horizontale.

7. Attelage de remorque pour véhicules motorisés selon l'une des revendications précédentes, **caractérisé en ce que** les mouvements se superposent.

8. Attelage de remorque pour véhicules motorisés selon l'une des revendications précédentes, **caractérisé en ce qu'**une surface latérale cylindrique (23) de l'organe d'axe rotatif (10) et la surface cunéiforme (28) sont placées l'une à côté de l'autre par rapport à un axe de pivotement (12) de l'organe d'axe rotatif, et **en ce que**, dans la position d'utilisation, la surface latérale cylindrique (23) s'appuie contre une paroi latérale cylindrique antérieure (3) du boîtier (1) et la surface cunéiforme (28) s'appuie contre la surface cunéiforme (29) du boîtier (1).
